# EUROPEAN PATENT APPLICATION

(11) **EP 3 429 125 A1**
(43) Date of publication of application: **16.01.2019**
(21) Application number: 16897536.5
(22) Date of filing: 06.04.2016
(51) Int. Cl.: H04L 12/24

(54) **TRAFFIC CONTROL METHOD AND APPARATUS IN SOFTWARE DEFINED NETWORK**

(71) Applicant: Huawei Technologies Co., Ltd., Longgang District Shenzhen, Guangdong 518129 (CN)
(72) Inventor: WANG, Wenming, Shenzhen Guangdong 518129 (CN)
(74) Representative: Maiwald Patent- und Rechtsanwaltsgesellschaft mbH
(86) International application number: PCT/CN2016/078537
(87) International publication number: WO 2017/173601

(57) **Abstract**

The present invention provides a traffic control method and a device in a software defined network SDN. The SDN includes a controller, a first device, and a second device, where the first device and the second device are configured to forward packets of a same service. The method includes: receiving, by the first device, a first packet of the service; forwarding, by the first device, the first packet, where a first quantity of tokens in a first token bucket of the first device are consumed in a process in which the first device forwards the first packet, and the first token bucket is corresponding to the service; and sending, by the first device to the second device, a first message that carries the first quantity, so that the second device removes the first quantity of tokens from a second token bucket of the second device, where the second token bucket is corresponding to the service, and the controller configures a same committed information rate CIR and committed burst size CBS for the first token bucket and the second token bucket. Therefore, a plurality of devices can jointly perform traffic control on a same service, and this is applicable to more scenarios in which traffic control needs to be performed.

## Description

### TECHNICAL FIELD

The present invention relates to the field of communications technologies, and more specifically, to a traffic control method and a device in a software defined network (Software Defined Network, SDN).

### BACKGROUND

A software defined network (Software Defined Network, SDN) is a new network architecture proposed by Emulex, and is an implementation of network virtualization. In the OpenFlow protocol, which is a core technology of the SDN, a control plane of a network device is separated from a data plane, so that network traffic can be flexibly controlled, and a network becomes more intelligent as a channel.

However, in a traffic lease (Wholesale) scenario, if rate limiting is performed based on a virtual operator, a controller may configure only a single device to perform rate limiting, and cannot configure a plurality of devices to jointly perform rate limiting.

### SUMMARY

The present invention provides a traffic control method and a device in an SDN, so that a plurality of devices can perform traffic control on a same service, and this is applicable to more scenarios in which traffic control needs to be performed.

According to a first aspect, a traffic control method in an SDN is provided, where the SDN includes a controller, a first device, and a second device, the first device and the second device are configured to forward packets of a same service, and the method includes: receiving, by the first device, a first packet of the service; forwarding, by the first device, the first packet, where a first quantity of tokens in a first token bucket of the first device are consumed in a process in which the first device forwards the first packet, and the first token bucket is corresponding to the service; and sending, by the first device, a first message to the second device, where the first message carries the first quantity, so that the second device removes the first quantity of tokens from a second token bucket of the second device, where the second token bucket is corresponding to the service, and the controller configures a same committed information rate (Committed Information Rate, CIR) and committed burst size (Committed Burst Size, CBS) for the first token bucket and the second token bucket.

It should be understood that packets of a same service are a class of packets that have a same destination Internet Protocol (Destination Internet Protocol, DIP) address, or that have a same source Internet Protocol (Source Internet Protocol, SIP) address, or in which some domains are the same.

It should be noted that, that the first device and the second device are configured to forward packets of a same service may be understood as follows: A service flow of a service is distributed on the first device and the second device.

Therefore, in the traffic control method in a software defined network SDN in this embodiment of the present invention, the first device and the second device forward packets of a same service, and the first device sends, to the second device, a message that carries a quantity of tokens consumed in a process in which the first device forwards a packet of the service, so that the second device can learn the quantity and remove the quantity of tokens from the token bucket of the second device. In this way, when receiving a packet of the service and forwarding the packet, the second device forwards the packet based on a quantity of tokens obtained after the quantity of tokens are removed. Therefore, the first device and the second device can jointly perform traffic control on the service, and this is applicable to more scenarios in which traffic control needs to be performed.

Optionally, the first device and the second device each may be an optical line terminal (Optical Line Terminal, OLT) in the SDN, or the first device and the second device each may be a router or a switch.

With reference to the first aspect, in a first possible implementation of the first aspect, the method further includes: receiving, by the first device, a second message sent by the second device, where the second message carries a second quantity, and the second quantity is a quantity of tokens in the second token bucket that are consumed in a process in which the second device forwards a second packet of the service; and removing, by the first device, the second quantity of tokens from the first token bucket.

That is, the first device and the second device notify each other of quantities of tokens that are in their respective token buckets and are consumed when they forward packets of a same service, and remove, from their respective token buckets, a quantity of tokens that are consumed by the other one. Therefore, a plurality of devices jointly perform traffic control on a same service.

With reference to the first aspect or the first possible implementation of the first aspect, in a second possible implementation of the first aspect, before the sending, by the first device, a first message to the second device, the method further includes: receiving, by the first device, indication information sent by the controller, where the indication information is used to instruct the first device to send the first message to the second device.

Optionally, the controller may send indication information to the second device, to instruct the second device to send, to the first device, second information that carries the second quantity.

With reference to the first aspect or the possible implementations of the first aspect, in a third possible implementation of the first aspect, the sending, by the first device, a first message to the second device includes: sending, by the first device, the first message to the second device in a broadcast manner.

With reference to the first aspect or the possible implementations of the first aspect, in a fourth possible implementation of the first aspect, the sending, by the first device, a first message to the second device includes: encapsulating, by the first device, the first quantity into an Internet Protocol IP packet; and sending, by the first device, the IP packet to the second device.

With reference to the first aspect or the possible implementations of the first aspect, in a fifth possible implementation of the first aspect, the method further includes: receiving, by the first device, configuration information sent by the controller, where the configuration information is used to instruct the first device to perform traffic control on the service and is used to indicate a value of the CIR and a value of the CBS.

According to a second aspect, a traffic control method in an SDN is provided, where the SDN includes a controller, a first device, and a second device, the first device and the second device are configured to forward packets of a same service, and the method includes: configuring, by the controller, the first device to perform traffic control on the service, configuring a committed information rate CIR of a first token bucket of the first device as a first preset value, and configuring a committed burst size CBS of the first token bucket as a second preset value, where the first token bucket is corresponding to the service; configuring, by the controller, the second device to perform traffic control on the service, configuring a CIR of a second token bucket of the second device as the first preset value, and configuring a CBS of the second token bucket as the second preset value, where the second token bucket is corresponding to the service; and sending, by the controller, first indication information to the first device, where the first indication information is used to instruct the first device to send, to the second device, a first message that carries a first quantity, and the first quantity is a quantity of tokens in the first token bucket that are consumed in a process in which the first device forwards a first packet of the service.

Optionally, the first device and the second device each may be an optical line terminal (Optical Line Terminal, OLT) in the SDN, or the first device and the second device each may be a router or a switch.

Optionally, the controller may send configuration information to the first device and the second device in a broadcast manner, or may send configuration information to each of the first device and the second device in a form of dedicated information.

Therefore, in the traffic control method in a software defined network SDN in this embodiment of the present invention, the first device and the second device forward packets of a same service, and the controller configures a same CIR and CBS for the first token bucket of the first device and the second token bucket of the second device, and instructs the first device to send, to the second device, a message that carries a quantity of tokens consumed in a process in which the first device forwards a packet of the service, so that the second device can learn the quantity and remove the quantity of tokens from the token bucket of the second device. In this way, when receiving a packet of the service and forwards the packet, the second device forwards the packet based on a quantity of tokens obtained after the quantity of tokens are removed. Therefore, the first device and the second device can jointly perform traffic control on the service, and this is applicable to more scenarios in which traffic control needs to be performed.

With reference to the second aspect, in a first possible implementation of the second aspect, the method further includes: sending, by the controller, second indication information to the second device, where the second indication information is used to instruct the second device to send, to the first device, a second message that carries a second quantity, and the second quantity is a quantity of tokens in the second token bucket that are consumed in a process in which the second device forwards a second packet of the service.

According to a third aspect, a device in an SDN is provided, where the SDN includes a controller, the device, and a second device, the device and the second device are configured to forward packets of a same service, and the device is configured to perform the method in any one of the first aspect or the possible implementations of the first aspect. Specifically, the device includes units configured to perform the method in any one of the first aspect or the possible implementations of the first aspect.

According to a fourth aspect, a controller in an SDN is provided, where the SDN includes the controller, a first device, and a second device, the first device and the second device are configured to forward packets of a same service, and the controller is configured to perform the method in any one of the second aspect or the possible implementations of the second aspect.

According to a fifth aspect, a device in an SDN is provided, including a processor, a memory, a receiver, and a transmitter, where the processor, the memory, the receiver, and the transmitter are connected to each other by using a bus system, the memory is configured to store an instruction, and the processor is configured to execute the instruction stored in the memory, to control the receiver to receive information and control the transmitter to send information, so that the device performs the method in any one of the first aspect or the possible implementations of the first aspect.

According to a sixth aspect, a controller in an SDN is provided, including a processor, a memory, and a transmitter, where the processor, the memory, and the transmitter are connected to each other by using a bus system, the memory is configured to store an instruction, and the processor is configured to execute the instruction stored in the memory, to control the transmitter to send information, so that the controller performs the method in any one of the second aspect or the possible implementations of the second aspect.

According to a seventh aspect, a computer readable medium is provided, configured to store a computer program, where the computer program includes an instruction used to perform the method in any one of the first aspect or the possible implementations of the first aspect.

According to an eighth aspect, a computer readable medium is provided, configured to store a computer program, where the computer program includes an instruction used to perform the method in any one of the second aspect or the possible implementations of the second aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show only some embodiments of the present invention, and a person of ordinary skill in the art may still derive other drawings from these accompanying drawings without creative efforts.
FIG. 1 is a diagram of an application scenario according to an embodiment of the present invention;
FIG. 2 is a schematic diagram of a working principle of a token bucket according to an embodiment of the present invention;
FIG. 3 is a schematic flowchart of a traffic control method in an SDN according to an embodiment of the present invention;
FIG. 4 is another schematic flowchart of a traffic control method in an SDN according to an embodiment of the present invention;
FIG. 5 is a schematic flowchart of a traffic control method in an SDN according to another embodiment of the present invention;
FIG. 6 is a schematic block diagram of a device in an SDN according to an embodiment of the present invention;
FIG. 7 is another schematic block diagram of a device in an SDN according to an embodiment of the present invention;
FIG. 8 is a schematic block diagram of a controller in an SDN according to an embodiment of the present invention;
FIG. 9 is a schematic block diagram of a device in an SDN according to another embodiment of the present invention; and
FIG. 10 is schematic block diagram of a controller in an SDN according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

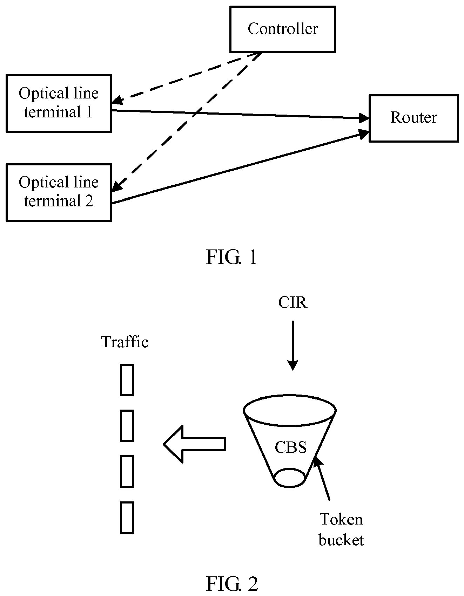

FIG. 1 is a schematic diagram of an application scenario according to an embodiment of the present invention. As shown in FIG. 1, a software defined network (Software Defined Network, SDN) includes a controller and at least one optical line terminal (Optical Line Terminal, OLT). The controller delivers a requirement to the OLT by using an OpenFlow command, and the OLT forwards a packet based on the command of the controller. OpenFlow commands mainly include search, packet editing, traffic policing (Policing), traffic measurement, and the like.

If rate limiting is performed based on a virtual operator, the controller may configure a specific OLT to perform traffic control. In addition, as shown in FIG. 1, when a service flow of the operator is distributed on two OLTs, the controller may configure the two OLTs (an OLT 1 and an OLT 2) to jointly perform traffic control on the service flow. It should be understood that only two OLTs are shown in FIG. 1 as an example. The present invention may further be applied to a scenario in which more OLTs are included.

It should be noted that a token bucket is an internal storage pool of a network device, and a token is a virtual packet that fills the token bucket at a specified rate. A working principle of the token bucket is shown in FIG. 2: The network device places a token into the token bucket at a fixed rate (committed information rate (Committed Information Rate, CIR)). When no traffic passes the network device or there is very low traffic, tokens are accumulated in the token bucket, and a maximum quantity of tokens that can be stored in the token bucket is referred to as a committed burst size (Committed Burst Size, CBS). When traffic passes the network device, each piece of traffic consumes a specific quantity of tokens. If there is no token in the token bucket, traffic is not allowed to pass the network device (or a packet cannot be sent). The traffic can pass the network device (or the packet can be sent) only when a new token is generated in the token bucket. Therefore, traffic of a packet can only be less than or equal to a token generation rate, to achieve a purpose of traffic limitation. Different services are corresponding to different token buckets, and the controller may configure different CIRs and CBSs for different token buckets.

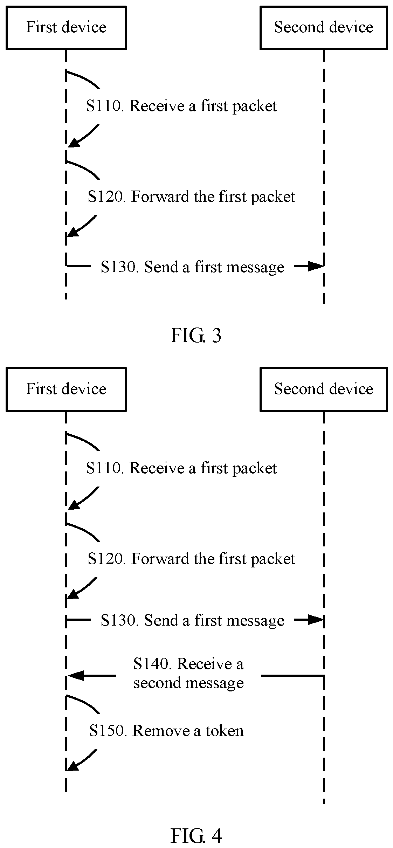

FIG. 3 is a schematic flowchart of a traffic control method in a software defined network SDN according to an embodiment of the present invention. The SDN includes a controller, a first device, and a second device, where the first device and the second device are configured to forward packets of a same service. As shown in FIG. 3, the method 100 includes the following steps:
S110. The first device receives a first packet of the service.
S120. The first device forwards the first packet, where a first quantity of tokens in a first token bucket of the first device are consumed in a process in which the first device forwards the first packet, and the first token bucket is corresponding to the service.

Specifically, when receiving the first packet, the first device may first determine, based on a value relationship between a byte quantity of the first packet and a quantity of tokens in the first token bucket, whether to forward the first packet. For example, the first device may choose to forward the first packet when the quantity of tokens in the first token bucket is greater than a quantity of tokens required for forwarding the first packet, or may discard the first packet when the quantity of tokens in the first token bucket is less than a quantity of tokens required for forwarding the first packet. Alternatively, the first device may not consider a quantity of tokens in the first token bucket, and directly forward the first packet provided that the first device receives the first packet.

S130. The first device sends a first message to the second device, where the first message carries the first quantity, so that the second device removes the first quantity of tokens from a second token bucket of the second device, where the second token bucket is corresponding to the service, and the controller configures a same committed information rate CIR and committed burst size CBS for the first token bucket and the second token bucket.

That is, the first device may notify, by using the first message, the second device of the quantity of tokens consumed when the first device forwards the first packet, so that after receiving the first message, the second device learns of the quantity of tokens consumed when the first device forwards the first packet, and then the second device removes the first quantity of tokens from the second token bucket. When receiving a packet of the service, the second device forwards the packet based on a quantity of tokens remained in the second token bucket after the first quantity of tokens are removed.

It should be noted that, in S130, a specific implementation in which the controller configures a same committed information rate CIR and committed burst size CBS for the first token bucket and the second token bucket may be as follows: The controller configures the first device to perform traffic control on the service, configures a CIR of the first token bucket of the first device as a first preset value, and configures a CBS of the first token bucket as a second preset value; and the controller configures the second device to perform traffic control on the service, configures a CIR of the second token bucket of the second device as the first preset value, and configures a CBS of the second token bucket as the second preset value.

A process in which the controller performs configuration on the first device and the second device may be implemented in a manner in which the controller sends configuration information to the first device and the second device, to instruct the first device and the second device to perform traffic control on the service and is used to indicate a value of the CIR and a value of the CBS.

In this embodiment of the present invention, optionally, as shown in FIG. 4, the method 100 further includes the following steps:

S140. The first device receives a second message sent by the second device, where the second message carries a second quantity, and the second quantity is a quantity of tokens in the second token bucket that are consumed in a process in which the second device forwards a second packet of the service.

S150. The first device removes the second quantity of tokens from the first token bucket.

That is, when the first device and the second device are bound together to perform traffic control on a service flow of a same service, the first device and the second device may notify each other of quantities of tokens consumed when they forward packets of the service, and remove, from their respective token buckets, tokens whose quantity is the quantity of tokens consumed when the other one forwards the packet. Therefore, the first device and the second device can jointly perform traffic control on a service flow of a same service.

It should be understood that only an example in which S140 and S150 are performed before S110 is used in FIG. 4 for description. Alternatively, S140 and S150 may be performed after S130.

Optionally, in an example, the first device may send the first message to the second device in a broadcast manner.

Optionally, the first device may receive indication information sent by the controller, and the indication information is used to instruct the first device to send the first message to the second device.

In addition, the controller may further send indication information to the second device, to instruct the second device to send the second message to the first device.

In this embodiment of the present invention, optionally, the controller may not send indication information to the second device, and may consider by default that if the second device receives the first message sent by the first device, the second device needs to send, to the first device, the second message that carries the second quantity, so that the first device and the second device can notify each other of the quantities of tokens consumed by them.

In this embodiment of the present invention, there may be one or more second devices. When there are a plurality of second devices, the first device sends the first message to the plurality of devices through broadcast, and receives a message sent by each of the plurality of devices. For example, if there are three devices: a device A, a device B, and a device C, the device A, the device B, and the device C perform traffic control on a service flow of a same service. When receiving the service flow of the service, the device A performs traffic control, and sends a quantity of consumed tokens to the device B and the device C. When receiving a message sent by the device A, the device B removes, from a token bucket of the device B, tokens whose quantity is the quantity of tokens consumed by the device A. When receiving the message sent by the device A, the device C consumes, in a token bucket of the device C, tokens whose quantity is the quantity specified by the device A. When receiving the service flow of the service, the device B performs traffic control, and sends a quantity of consumed tokens to the device A and the device C. When receiving a message sent by the device B, the device A consumes, in a token bucket of the device A, tokens whose quantity is the quantity of tokens consumed by the device B. When receiving the message sent by the device B, the device C consumes, in the token bucket of the device C, tokens whose quantity is the quantity of tokens consumed by the device B. When receiving the service flow of the service, the device C performs traffic control, and sends a quantity of consumed tokens to the device A and the device B. When receiving a message sent by the device C, the device A consumes, in the token bucket of the device A, tokens whose quantity is the quantity of tokens consumed by the device C. When receiving the message sent by the device C, the device B consumes, in the token bucket of the device B, tokens whose quantity is the quantity of tokens consumed by the device C.

Optionally, the first device may encapsulate the first quantity into an Internet Protocol (Internet Protocol, IP) packet, and send the IP packet to the second device. Therefore, after receiving the IP packet, the second device may obtain the first quantity by parsing the IP packet.

It should be noted that the terms such as "first" and "second" in the foregoing embodiment are only used to distinguish between described objects, and imposes no limitation on the described objects.

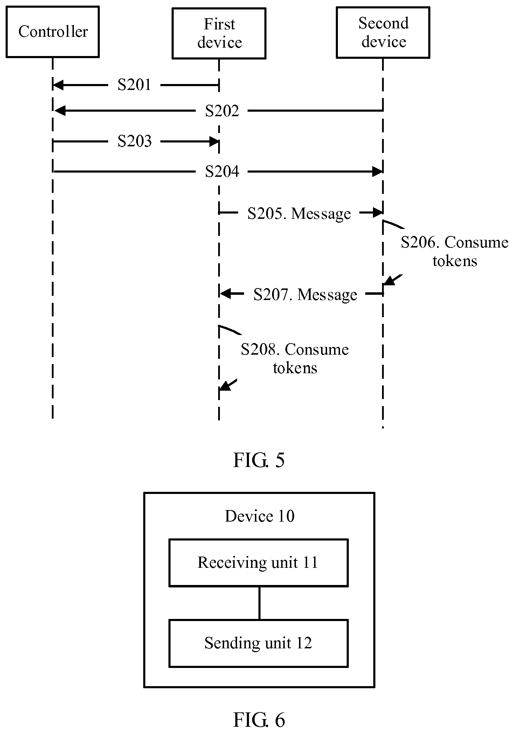

The following describes, with reference to FIG. 5, a traffic control method in a software defined network SDN according to another embodiment of the present invention. As shown in FIG. 5, the method 200 includes the following steps:
S201. A device A is connected to a controller.
S202. A device B is connected to the controller.
S203. The controller configures the device A to perform policing (policing) on a service flow of a service.

Specifically, a rate used when the device A performs control on the service flow is a CIR1, and a bucket depth is a CBS 1.

S204. The controller configures the device B to perform policing on the service flow of the service.

Likewise, a rate used when the device B performs control on the service flow is the CIR1, and a bucket depth is the CBS1.

S205. The device A receives the service flow of the service, performs policing on the service flow, encapsulates a quantity of consumed tokens into a message, and sends the message to the device B.

S206. The device B receives the message sent by the device A, and consumes a same quantity of tokens in a token bucket of the device B as the quantity of tokens consumed by the device A.

S207. The device B receives the service flow of the service, performs policing on the service flow, encapsulates a quantity of consumed tokens into a message, and sends the message to the device A.

S208. After receiving the message sent by the device B, the device A consumes tokens in a token bucket of the device A.

It should be understood that sequence numbers in the procedure in FIG. 5 do not necessarily represent a sequence during execution of the procedure. For example, S201 and S202 may be performed at the same time, or S207 and S208 are performed before S205, or S205 and S207 may be performed at the same time. A specific execution sequence is reflected by a logical relationship between the steps.

Therefore, in the traffic control method in a software defined network SDN in the embodiments of the present invention, the first device and the second device forward packets of a same service, and the first device sends, to the second device, a message that carries a quantity of tokens consumed in a process in which the first device forwards a packet of the service, so that the second device can learn the quantity and remove the quantity of tokens from the token bucket of the second device. In this way, when receiving a packet of the service and forwards the packet, the second device forwards the packet based on a quantity of tokens obtained after the quantity of tokens are removed. Therefore, the first device and the second device can jointly perform traffic control on the service, and this is applicable to more scenarios in which traffic control needs to be performed.

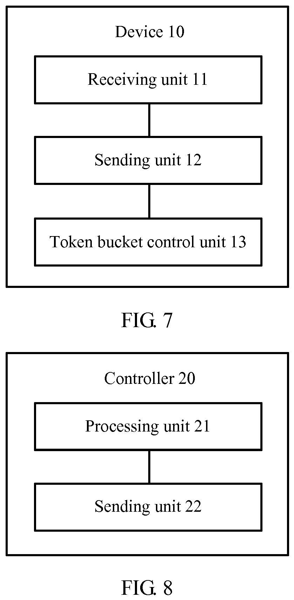

The foregoing has described in detail, with reference to FIG. 1 to FIG. 5, the traffic control method in a software defined network SDN according to the embodiments of the present invention. The following describes, with reference to FIG. 6 and FIG. 7, a device 10 in an SDN according to an embodiment of the present invention. The SDN includes a controller, the device, and a second device. The device and the second device are configured to forward packets of a same service.

As shown in FIG. 6, the device 10 according to this embodiment of the present invention includes:
a receiving unit 11, configured to receive a first packet of the service; and
a sending unit 12, configured to forward the first packet, where a first quantity of tokens in a first token bucket of the device are consumed in a process in which the sending unit forwards the first packet, and the first token bucket is corresponding to the service.

The sending unit 12 is further configured to send a first message to the second device, where the first message carries the first quantity, so that the second device removes the first quantity of tokens from a second token bucket of the second device, where the second token bucket is corresponding to the service, and the controller configures a same committed information rate CIR and committed burst size CBS for the first token bucket and the second token bucket.

Therefore, the device in a software defined network SDN according to this embodiment of the present invention and the second device forward packets of a same service, and the device sends, to the second device, a message that carries a quantity of tokens consumed in a process in which the device forwards a packet of the service, so that the second device can learn the quantity and remove the quantity of tokens from the token bucket of the second device. In this way, when receiving a packet of the service and forwards the packet, the second device forwards the packet based on a quantity of tokens obtained after the quantity of tokens are removed. Therefore, the device and the second device can jointly perform traffic control on the service, and this is applicable to more scenarios in which traffic control needs to be performed.

In this embodiment of the present invention, optionally, as shown in FIG. 7, the device 10 further includes a token bucket control unit 13.

The receiving unit 11 is further configured to receive a second message sent by the second device, where the second message carries a second quantity, and the second quantity is a quantity of tokens in the second token bucket that are consumed in a process in which the second device forwards a second packet of the service; and
the token bucket control unit 13 is configured to remove the second quantity of tokens from the first token bucket.

In this embodiment of the present invention, optionally, before the sending unit 12 sends the first message to the second device, the receiving unit 11 is further configured to receive indication information sent by the controller, where the indication information is used to instruct the device to send the first message to the second device.

In this embodiment of the present invention, optionally, the sending unit 12 is specifically configured to send the first message to the second device in a broadcast manner.

In this embodiment of the present invention, optionally, the sending unit 12 is specifically configured to: encapsulate the first quantity into an Internet Protocol IP packet, and send the IP packet to the second device.

In this embodiment of the present invention, optionally, the receiving unit 11 is further configured to receive configuration information sent by the controller, where the configuration information is used to instruct the device to perform traffic control on the service and is used to indicate a value of the CIR and a value of the CBS

It should be understood that the device 10 according to this embodiment of the present invention may be corresponding to the first device that performs the method 100 in the embodiments of the present invention; and the foregoing and other operations and/or functions of the modules of the device 10 are separately used to implement procedures corresponding to the first device in the methods in FIG. 3 and FIG. 4. For brevity, details are not described herein again.

Therefore, the device in a software defined network SDN according to this embodiment of the present invention and the second device forward packets of a same service, and the device sends, to the second device, a message that carries a quantity of tokens consumed in a process in which the device forwards a packet of the service, so that the second device can learn the quantity and remove the quantity of tokens from the token bucket of the second device. In this way, when receiving a packet of the service and forwards the packet, the second device forwards the packet based on a quantity of tokens obtained after the quantity of tokens are removed. Therefore, the device and the second device can jointly perform traffic control on the service, and this is applicable to more scenarios in which traffic control needs to be performed.

As shown in FIG. 8, FIG. 8 shows a controller 20 in a software defined network SDN according to an embodiment of the present invention. The SDN includes the controller 20, a first device, and a second device. The first device and the second device are configured to forward packets of a same service. The controller 20 includes:
a processing unit 21, configured to: configure the first device to perform traffic control on the service, configure a committed information rate CIR of a first token bucket of the first device as a first preset value, and configure a committed burst size CBS of the first token bucket as a second preset value, where the first token bucket is corresponding to the service, where
the processing unit 21 is further configured to: configure the second device to perform traffic control on the service, configure a CIR of a second token bucket of the second device as the first preset value, and configure a CBS of the second token bucket as the second preset value, where the second token bucket is corresponding to the service; and
a sending unit 22, configured to send first indication information to the first device, where the first indication information is used to instruct the first device to send, to the second device, a first message that carries a first quantity, and the first quantity is a quantity of tokens in the first token bucket that are consumed in a process in which the first device forwards a first packet of the service.

Therefore, the controller in a software defined network SDN according to this embodiment of the present invention configures a same CIR and CBS for the first token bucket of the first device and the second token bucket of the second device, and instructs the first device to send, to the second device, a message that carries a quantity of tokens consumed in a process in which the first device forwards a packet of a service, so that the second device can learn the quantity and remove the quantity of tokens from the token bucket of the second device. In this way, when receiving a packet of the service and forwards the packet, the second device forwards the packet based on a quantity of tokens obtained after the quantity of tokens are removed. Therefore, the first device and the second device can jointly perform traffic control on the service, and this is applicable to more scenarios in which traffic control needs to be performed.

In this embodiment of the present invention, optionally, the sending unit 22 is further configured to send second indication information to the second device, where the second indication information is used to instruct the second device to send, to the first device, a second message that carries a second quantity, and the second quantity is a quantity of tokens in the second token bucket that are consumed in a process in which the second device forwards a second packet of the service.

It should be understood that the controller 20 according to this embodiment of the present invention may be corresponding to the controller that performs the method 100 in the embodiments of the present invention; and the foregoing and other operations and/or functions of the modules of the controller 20 are separately used to implement procedures corresponding to the controller in the methods in FIG. 3 and FIG. 4. For brevity, details are not described herein again.

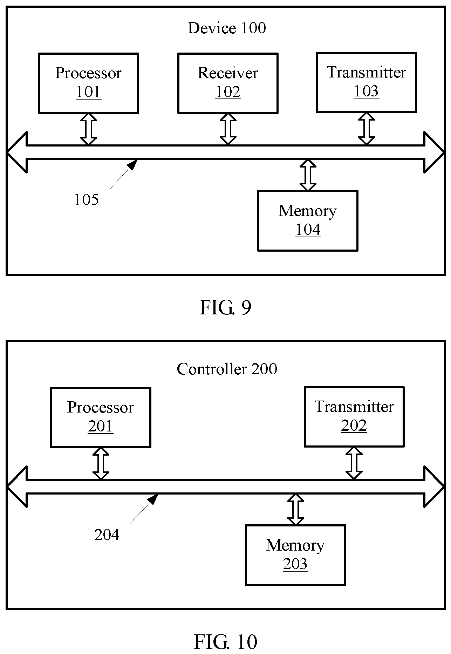

As shown in FIG. 9, an embodiment of the present invention further provides a device 100 in a software defined network SDN. The SDN includes a controller, the device 100, and a second device. The device 100 and the second device are configured to forward packets of a same service. The device 100 includes a processor 101, a receiver 102, a transmitter 103, and a memory 104. The processor 101, the memory 104, the receiver 102, and the transmitter 103 are connected to each other by using a bus system 105. The memory 104 is configured to store an instruction. The processor 101 is configured to execute the instruction stored in the memory 104, to control the receiver 102 to receive a signal and control the transmitter 103 to send a signal. The receiver 102 is configured to receive a first packet of the service. The transmitter 103 is configured to forward the first packet. A first quantity of tokens in a first token bucket of the device are consumed in a process in which the transmitter 103 forwards the first packet, and the first token bucket is corresponding to the service. The transmitter 103 is further configured to send a first message to the second device, where the first message carries the first quantity, so that the second device removes the first quantity of tokens from a second token bucket of the second device. The second token bucket is corresponding to the service, and the controller configures a same committed information rate CIR and committed burst size CBS for the first token bucket and the second token bucket.

Therefore, the device in a software defined network SDN according to this embodiment of the present invention and the second device forward packets of a same service, and the device sends, to the second device, a message that carries a quantity of tokens consumed in a process in which the device forwards a packet of the service, so that the second device can learn the quantity and remove the quantity of tokens from the token bucket of the second device. In this way, when receiving a packet of the service and forwards the packet, the second device forwards the packet based on a quantity of tokens obtained after the quantity of tokens are removed. Therefore, the device and the second device can jointly perform traffic control on the service, and this is applicable to more scenarios in which traffic control needs to be performed.

It should be understood that, in this embodiment of the present invention, the processor 101 may be a central processing unit (Central Processing Unit, CPU), or the processor 101 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The memory 104 may include a read-only memory and a random access memory, and provides an instruction and data for the processor 101. A part of the memory 104 may further include a nonvolatile random access memory. For example, the memory 104 may further store information about a device type.

In addition to a data bus, the bus system 105 may further include a power bus, a control bus, a status signal bus, and the like. However, for clarity of description, various buses are marked as the bus system 105 in the figure.

In an implementation process, the steps in the foregoing methods may be completed by using an integrated logic circuit of hardware in the processor 101 or an instruction in a form of software. The steps of the methods disclosed with reference to the embodiments of the present invention may be directly implemented by using a hardware processor, or may be implemented by using a combination of hardware in the processor and a software module. The software module may be located in a mature storage medium in the art, such as a random access memory, a flash memory, a read-only memory, a programmable read-only memory or an electrically erasable programmable memory, or a register. The storage medium is located in the memory 104. The processor 101 reads information from the memory 104, and completes the steps of the foregoing methods in combination with hardware in the processor. To avoid repetition, details are not described herein.

Optionally, in an embodiment, the receiver 102 is further configured to receive a second message sent by the second device, where the second message carries a second quantity, and the second quantity is a quantity of tokens in the second token bucket that are consumed in a process in which the second device forwards a second packet of the service; and
the processor 101 is configured to remove the second quantity of tokens from the first token bucket.

Optionally, in an embodiment, before the transmitter 103 sends the first message to the second device, the receiver 102 is further configured to receive indication information sent by the controller, where the indication information is used to instruct the device to send the first message to the second device.

Optionally, in an embodiment, the transmitter 103 is configured to send the first message to the second device in a broadcast manner.

Optionally, in an embodiment, the transmitter 103 is specifically configured to: encapsulate the first quantity into an Internet Protocol IP packet, and send the IP packet to the second device.

Optionally, in an embodiment, the receiver 102 is further configured to receive configuration information sent by the controller, where the configuration information is used to instruct the device to perform traffic control on the service and is used to indicate a value of the CIR and a value of the CBS.

It should be understood that the device 100 according to this embodiment of the present invention may be corresponding to the device 10 in the embodiments of the present invention, and may be corresponding to the first device that performs the method 100 according to the embodiments of the present invention, and the foregoing and other operations and/or functions of the modules in the device 100 are separately used to implement procedures corresponding to the first device in the methods in FIG. 3 and FIG. 4. For brevity, details are not described herein again.

Therefore, the device in a software defined network SDN according to this embodiment of the present invention and the second device forward packets of a same service, and the device sends, to the second device, a message that carries a quantity of tokens consumed in a process in which the device forwards a packet of the service, so that the second device can learn the quantity and remove the quantity of tokens from the token bucket of the second device. In this way, when receiving a packet of the service and forwards the packet, the second device forwards the packet based on a quantity of tokens obtained after the quantity of tokens are removed. Therefore, the device and the second device can jointly perform traffic control on the service, and this is applicable to more scenarios in which traffic control needs to be performed.

As shown in FIG. 10, an embodiment of the present invention further provides a controller 200 in a software defined network SDN. The SDN includes the controller 200, a first device, and a second device. The first device and the second device are configured to forward packets of a same service. The controller 200 includes a processor 201, a transmitter 202, and a memory 203. The processor 201, the memory 203, and the transmitter 202 are connected to each other by using a bus system 204. The memory 203 is configured to store an instruction. The processor 201 is configured to execute the instruction stored in the memory 203, to control the transmitter 202 to send a signal. The processor 201 is configured to: configure the first device to perform traffic control on the service, configure a committed information rate CIR of a first token bucket of the first device as a first preset value, and configure a committed burst size CBS of the first token bucket as a second preset value, where the first token bucket is corresponding to the service. The processor 201 is further configured to: configure the second device to perform traffic control on the service, configure a CIR of a second token bucket of the second device as the first preset value, and configure a CBS of the second token bucket as the second preset value, where the second token bucket is corresponding to the service. The transmitter 202 is configured to send first indication information to the first device, where the first indication information is used to instruct the first device to send, to the second device, a first message that carries a first quantity, and the first quantity is a quantity of tokens in the first token bucket that are consumed in a process in which the first device forwards a first packet of the service.

Therefore, the controller in a software defined network SDN according to this embodiment of the present invention configures a same CIR and CBS for the first token bucket of the first device and the second token bucket of the second device, and instructs the first device to send, to the second device, a message that carries a quantity of tokens consumed in a process in which the first device forwards a packet of a service, so that the second device can learn the quantity and remove the quantity of tokens from the token bucket of the second device. In this way, when receiving a packet of the service and forwards the packet, the second device forwards the packet based on a quantity of tokens obtained after the quantity of tokens are removed. Therefore, the first device and the second device can jointly perform traffic control on the service, and this is applicable to more scenarios in which traffic control needs to be performed.

It should be understood that, in this embodiment of the present invention, the processor 201 may be a central processing unit (Central Processing Unit, CPU), or the processor 201 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The memory 203 may include a read-only memory and a random access memory, and provides an instruction and data for the processor 201. A part of the memory 203 may further include a nonvolatile random access memory. For example, the memory 203 may further store information about a device type.

In addition to a data bus, the bus system 204 may further include a power bus, a control bus, a status signal bus, and the like. However, for clarity of description, various buses are marked as the bus system 204 in the figure.

In an implementation process, the steps in the foregoing methods may be completed by using an integrated logic circuit of hardware in the processor 201 or an instruction in a form of software. The steps of the methods disclosed with reference to the embodiments of the present invention may be directly implemented by using a hardware processor, or may be implemented by using a combination of hardware in the processor and a software module. The software module may be located in a mature storage medium in the art, such as a random access memory, a flash memory, a read-only memory, a programmable read-only memory or an electrically erasable programmable memory, or a register. The storage medium is located in the memory 203. The processor 201 reads information from the memory 203, and completes the steps of the foregoing methods in combination with hardware in the processor. To avoid repetition, details are not described herein.

Optionally, in an embodiment, the transmitter 202 is further configured to send second indication information to the second device, where the second indication information is used to instruct the second device to send, to the first device, a second message that carries a second quantity, and the second quantity is a quantity of tokens in the second token bucket that are consumed in a process in which the second device forwards a second packet of the service.

It should be understood that the controller 200 according to this embodiment of the present invention may be corresponding to the controller 20 in the embodiments of the present invention, and may be corresponding to the controller that performs the method 100 according to the embodiments of the present invention, and the foregoing and other operations and/or functions of the modules in the controller 200 are separately used to implement procedures corresponding to the controller in the methods in FIG. 3 and FIG. 4. For brevity, details are not described herein again.

Therefore, the controller in a software defined network SDN according to this embodiment of the present invention configures a same CIR and CBS for the first token bucket of the first device and the second token bucket of the second device, and instructs the first device to send, to the second device, a message that carries a quantity of tokens consumed in a process in which the first device forwards a packet of a service, so that the second device can learn the quantity and remove the quantity of tokens from the token bucket of the second device. In this way, when receiving a packet of the service and forwards the packet, the second device forwards the packet based on a quantity of tokens obtained after the quantity of tokens are removed. Therefore, the first device and the second device can jointly perform traffic control on the service, and this is applicable to more scenarios in which traffic control needs to be performed.

A person of ordinary skill in the art may be aware that the units and algorithm steps in the examples described with reference to the embodiments disclosed in this specification may be implemented by electronic hardware or a combination of computer software and electronic hardware. Whether the functions are implemented by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for brevity and ease of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is only an example. For example, the unit division is only logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements, to achieve the objectives of the solutions of the embodiments.

In addition, function units in the embodiments of the present invention may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A traffic control method in a software defined network SDN, wherein the SDN comprises a controller, a first device, and a second device, the first device and the second device are configured to forward packets of one service, and the method comprises:
receiving, by the first device, a first packet of the service;
forwarding, by the first device, the first packet, wherein a first quantity of tokens in a first token bucket of the first device are consumed in a process in which the first device forwards the first packet, and the first token bucket is corresponding to the service; and
sending, by the first device, a first message to the second device, wherein the first message carries the first quantity, so that the second device removes the first quantity of tokens from a second token bucket of the second device, wherein the second token bucket is corresponding to the service, and the controller configures a same committed information rate CIR and committed burst size CBS for the first token bucket and the second token bucket.

2. The method according to claim 1, wherein the method further comprises:
receiving, by the first device, a second message sent by the second device, wherein the second message carries a second quantity, and the second quantity is a quantity of tokens in the second token bucket that are consumed in a process in which the second device forwards a second packet of the service; and
removing, by the first device, the second quantity of tokens from the first token bucket.

3. The method according to claim 1 or 2, wherein before the sending, by the first device, a first message to the second device, the method further comprises:
receiving, by the first device, indication information sent by the controller, wherein the indication information is used to instruct the first device to send the first message to the second device.

4. The method according to any one of claims 1 to 3, wherein the sending, by the first device, a first message to the second device comprises:
sending, by the first device, the first message to the second device in a broadcast manner.

5. The method according to any one of claims 1 to 4, wherein the sending, by the first device, a first message to the second device comprises:
encapsulating, by the first device, the first quantity into an Internet Protocol IP packet; and
sending, by the first device, the IP packet to the second device.

6. The method according to any one of claims 1 to 5, wherein the method further comprises:
receiving, by the first device, configuration information sent by the controller, wherein the configuration information is used to instruct the first device to perform traffic control on the service and is used to indicate a value of the CIR and a value of the CBS.

7. A traffic control method in a software defined network SDN, wherein the SDN comprises a controller, a first device, and a second device, the first device and the second device are configured to forward packets of a same service, and the method comprises:
configuring, by the controller, the first device to perform traffic control on the service, configuring a committed information rate CIR of a first token bucket of the first device as a first preset value, and configuring a committed burst size CBS of the first token bucket as a second preset value, wherein the first token bucket is corresponding to the service;
configuring, by the controller, the second device to perform traffic control on the service, configuring a CIR of a second token bucket of the second device as the first preset value, and configuring a CBS of the second token bucket as the second preset value, wherein the second token bucket is corresponding to the service; and
sending, by the controller, first indication information to the first device, wherein the first indication information is used to instruct the first device to send, to the second device, a first message that carries a first quantity, and the first quantity is a quantity of tokens in the first token bucket that are consumed in a process in which the first device forwards a first packet of the service.

8. The method according to claim 7, wherein the method further comprises:
sending, by the controller, second indication information to the second device, wherein the second indication information is used to instruct the second device to send, to the first device, a second message that carries a second quantity, and the second quantity is a quantity of tokens in the second token bucket that are consumed in a process in which the second device forwards a second packet of the service.

9. A device in a software defined network SDN, wherein the SDN comprises a controller, the device, and a second device, the device and the second device are configured to forward packets of a same service, and the device comprises:
a receiving unit, configured to receive a first packet of the service; and
a sending unit, configured to forward the first packet, wherein a first quantity of tokens in a first token bucket of the device are consumed in a process in which the sending unit forwards the first packet, and the first token bucket is corresponding to the service, wherein
the sending unit is further configured to send a first message to the second device, wherein the first message carries the first quantity, so that the second device removes the first quantity of tokens from a second token bucket of the second device, wherein the second token bucket is corresponding to the service, and the controller configures a same committed information rate CIR and committed burst size CBS for the first token bucket and the second token bucket.

10. The device according to claim 9, wherein the device further comprises a token bucket control unit;
the receiving unit is further configured to receive a second message sent by the second device, wherein the second message carries a second quantity, and the second quantity is a quantity of tokens in the second token bucket that are consumed in a process in which the second device forwards a second packet of the service; and
the token bucket control unit is configured to remove the second quantity of tokens from the first token bucket.

11. The device according to claim 9 or 10, wherein before the sending unit sends the first message to the second device, the receiving unit is further configured to:
receive indication information sent by the controller, wherein the indication information is used to instruct the device to send the first message to the second device.

12. The device according to any one of claims 9 to 11, wherein the sending unit is specifically configured to:
send the first message to the second device in a broadcast manner.

13. The device according to any one of claims 9 to 12, wherein the sending unit is specifically configured to:
encapsulate the first quantity into an Internet Protocol IP packet; and
send the IP packet to the second device.

14. The device according to any one of claims 9 to 13, wherein the receiving unit is further configured to:
receive configuration information sent by the controller, wherein the configuration information is used to instruct the device to perform traffic control on the service and is used to indicate a value of the CIR and a value of the CBS.

15. A controller in a software defined network SDN, wherein the SDN comprises the controller, a first device, and a second device, the first device and the second device are configured to forward packets of a same service, and the controller comprises:
a processing unit, configured to: configure the first device to perform traffic control on the service, configure a committed information rate CIR of a first token bucket of the first device as a first preset value, and configure a committed burst size CBS of the first token bucket as a second preset value, wherein the first token bucket is corresponding to the service, wherein
the processing unit is further configured to: configure the second device to perform traffic control on the service, configure a CIR of a second token bucket of the second device as the first preset value, and configure a CBS of the second token bucket as the second preset value, wherein the second token bucket is corresponding to the service; and
a sending unit, configured to send first indication information to the first device, wherein the first indication information is used to instruct the first device to send, to the second device, a first message that carries a first quantity, and the first quantity is a quantity of tokens in the first token bucket that are consumed in a process in which the first device forwards a first packet of the service.

16. The controller according to claim 15, wherein the sending unit is further configured to:
send second indication information to the second device, wherein the second indication information is used to instruct the second device to send, to the first device, a second message that carries a second quantity, and the second quantity is a quantity of tokens in the second token bucket that are consumed in a process in which the second device forwards a second packet of the service.
